# EUROPÄISCHE PATENTSCHRIFT

(11) **EP 0 561 170 B1**
(45) Veröffentlichungstag und Bekanntmachung des Hinweises auf die Patenterteilung: **23.10.1996**
(21) Anmeldenummer: 93102585.2
(22) Anmeldetag: 19.02.1993
(51) Int. Cl.: B01D 17/025, B01D 17/12, C02F 9/00

(54) **Entsorgungsvorrichtung zum Abscheiden von Öl aus Schmutzwasser**
Disposal apparatus for separating oil from waste water
Dispositif d'enlèvement pour la séparation de l'huile dans l'eau usée

(30) Priorität: 17.03.1992 DE 4208506
(43) Veröffentlichungstag der Anmeldung: 22.09.1993
(73) Patentinhaber: Herm. J. Hellmers GmbH, D-22113 Hamburg (DE)
(72) Erfinder: Harder, Michael, Dipl.-Ing., W-2050 Hamburg 80 (DE)
(74) Vertreter: Niedmers, Ole, Dipl.-Phys.

(56) Entgegenhaltungen:
- DE-A- 4 017 229
- DE-U- 9 014 300
- GB-A- 2 116 447
- US-A- 3 965 004

## Beschreibung

Die Erfindung betrifft eine Entsorgungsvorrichtung zur Abscheidung von Öl aus Schmutzwasser, die folgende Komponenten umfaßt:
- einen Kessel, in dem sich ein Ölsammelbehälter befindet, und eine Schlammkammer, die von einer Wassersammelkammer durch eine verschiebbare Trennwand getrennt wird, sowie einen Vorfilter,
- eine Förderpumpe und einen Ölabscheider sowie eine Rückführung des im Ölabscheider vom Öl getrennten Brauchwassers in den Kessel.

Aus der DE-U-90 14 300 ist eine Entsorgungsvorrichtung zum Abscheiden von Öl aus Schmutzwasser bekannt, die eine Schlammkammer, einen Vorreiniger, eine Förderpumpe, einen Ölabscheider und einen Ölsammelbehälter aufweist.

In den verschiedensten gewerblichen und industriellen Bereichen, beispielsweise Autowaschanlagen, fällt Abwasser an, das einen hohen Kohlenwasserstoffgehalt aufweist und daher entsorgt werden muß, wobei ein Einleiten in kommunale Kläranlagen oftmals nicht möglich ist.

Es hat sich herausgestellt, daß eine zufriedenstellende Abtrennung der Kohlenwasserstoffe aus dem Abwasser nicht immer möglich ist, insbesondere dann, wenn das kohlenwasserstoffhaltige Abwasser auch Chemikalien enthält, die als Detergenzien wirken können. In diesem Fall ist eine zufriedenstellende Abtrennung des Kohlenwasserstoffgehaltes unter einem bestimmten Grenzwert nicht immer mit Hilfe der aus dem Stand der Technik bekannten Entsorgungsvorrichtung möglich.

Aus der DE-A-4 017 229 ist eine Vorrichtung zum Reinigen von Flüssigkeiten durch Abscheidung von Verunreinigungen bekannt, die einen Separator in Form eines Behälters umfaßt, der durch seine runde Form eine Art Rinne im Boden bildet. Dadurch wird eine tiefste Stelle im Behälter gebildet, in der sich Schmutz sammelt. Aufgrund der Größe des bekannten Separators und des sich daraus ergebenden hohen Arbeitsaufwandes bei einer Reinigung ist dieser bekannte Separator einerseits nur bedingt, Vorfiltrationsaufgaben zu übernehmen, und andererseits eine einfache Demontage für Reinigungszwecke zu erlauben. Schließlich ist mit der bekannten Vorrichtung nicht sichergestellt, daß beim Abpumpen von Öl keine Änderung der Strömung auftritt, um die Verunreinigungen nicht wieder aufzuwirbeln.

Aus der US-A-3 965 004 ist ein Reinigungssystem bekannt, mit dem Öl aus öligem Wasser mittels eines Koaleszierers entfernt wird, wobei zur Reinigung ebenfalls ein keramischer Wachsabscheider verwendet wird, der in den Reinigungskreislauf vor den Koaleszierers angeordnet wird, um im Öl befindliche Wachsanteile, Asphalte oder ähnliche Materialien abzuscheiden, die sonst schnell die kleinen Löcher des Koaleszierers zusetzen würden. Das bekannte System dient zur Entsorgung von Seewasser-Erdölgemisches von Tankschiffen, die bei der Leerfahrt in ihren Tanks Ballastwasser aufnehmen, wobei dabei das Ballastwasser mit Erdöl vermischt bzw. verunreinigt wird.

Aufgabe der vorliegenden Erfindung ist es daher, eine Entsorgungsvorrichtung zur Verfügung zu stellen, die eine verbesserte Abtrennung der Kohlenwasserstoffverunreingungen, insbesondere Öl, aus dem Schmutzwasser ermöglicht.

Gelöst wird die Aufgabe gemäß der Erfindung dadurch, daß die Entsorgungsvorrichtung weiterhin einen Zwischenfilter aufweist, der zwischen der Förderpumpe und dem Ölabscheider angeordnet ist, wobei der Zwischenfilter im Innenraum des Filters Koaleszierplatten aufweist und mit dem Boden des Filtergehäuses ein Auffangbehälter verbunden ist, der mittels Durchgangsöffnungen mit dem Filterinnenraum in Verbindung steht.

Da Ölsammelbehälter, Schlammkammer, Wassersammelkammer, verschiebbare Trennwand und Vorfilter in einem vorzugsweise zylinderförmigen Kessel angeordnet sind, kann die Entsorgungsvorrichtung bequem zu den jeweiligen Einsatzorten transportiert werden.

Bei einer besonders bevorzugten Ausführungsform weist der Auffangbehälter Anschlüsse mit Flanschen auf, die über Ventile abgesperrt werden können. Dadurch ist eine Durchspülung des Auffangbehälters zur Entfernung des gesammelten Schmutzes möglich.

Bei den Koaleszierplatten handelt es sich um gewellte, übereinander in horizontal er Richtung angeordnete Platten, die von dem ölhaltigen Abwasser in horizontaler Richtung durchströmt werden. Die Koaleszierplatten weisen an den Scheitelpunkten ihrer Wellen Durchtrittsöffnungen auf, die eine Vortrennung der Kohlenwasserstoffphase nach oben ermöglichen. Gleichzeitig werden teilchenförmige Verunreinigungen aus dem zu reinigenden Wasser abgetrennt; diese fallen durch die Durchtrittsöffnungen, die an den Scheitelpunkten der nach unten gerichteten Wölbungen angebracht sind, nach unten. Durch Durchtrittsöffnungen gelangen die teilchenförmigen Verunreinigungsbestandteile in den Auffangbehälter, der mit dem Zwischenfilter druckfest verbunden ist und sich an der Unterseite des Zwischenfilters befindet.

In einer bevorzugten Ausführungsform weist die erfindungsgemäße Entsorgungsvorrichtung einen Monitor zur Bestimmung des Kohlenwasserstoffgehaltes (Öl) des Abwassers auf. In einer bevorzugten Ausführungsform wird hierbei das aus dem Öl separator abgezogene Wasser durch eine Meßzelle geleitet, wobei eine Messung des Kohlenwasserstoffgehaltes mit Hilfe der Streulichtmeßmethode erfolgt. Zur Messung eingesetzt wird in bevorzugter Weise Licht des infraroten Wellenbereiches, wobei Wellenlängen zwischen 950 und 980 µm besonders bevorzugt sind. In einer weiteren bevorzugten Ausführungsform ist der Monitor mit einem Linienschreiber gekoppelt, der kontinuierlich den Kohlenwasserstoffgehalt des gereinigten Abwassers aufzeichnet. Dies dient der Dokumentation und dem Nachweis der Reinigungsleistung.

In einer weiteren bevorzugten Ausführungsform weist die erfindungsgemäße Entsorgungsvorrichtung ein Zweiwegeschaltventil auf, das über den Monitor derart gesteuert wird, daß eine Ableitung des gereinigten Abwassers über den Auslaß nur dann möglich ist, wenn ein bestimmter Kohlenwasserstoffgrenzwert (beispielsweise 5 ppm) unterschritten wird. Wird dagegen dieser Grenzwert überschritten, dann wird das Zweiwege-Schaltventil so geschaltet, daß das Abwasser entweder in die Schmutzkammer oder in die Wassersammelkammer geleitet wird. Es ist dann ein erneuter Durchl auf des Abwassers durch den Ölseparator und den Zwischenfilter und/oder den Vorfilter möglich.

In einer bevorzugten Ausführungsform der vorliegenden Erfindung ist der Ölsammelbehälter in einem Kessel angeordnet, in dem sich auch der Vorfilter befindet. Die Wassersammelkammer und der Schmutzbehälter sind voneinander durch eine verschiebbare Trennwand getrennt. Diese verschiebbare Trennwand wird durch ein Einstellen des Unterdruckes an der Schmutzkammer bzw. an der Wassersammelkammer bewegt. Diese Trennwand ist auch arretierbar, damit eine einmal gewählte Position der Trennwand auch dann beibehalten werden kann, wenn an die Schlammkammer oder den Wassersammelbehälter Unterdruck angelegt wird.

Die bewegbare Trennwand ist vorzugsweise so ausgestaltet, daß die der Wassersammelkammer zugewandte Seite eine solche Form hat, daß diese komplementär zu der Oberfläche der Ölsammelkammer ist, die der Wassersammelkammer zugewandt ist. Wenn also die Trennwand ganz auf die Ölsammelkammer zugefahren wird, weist die Wassersammelkammer so gut wie kein Volumen mehr auf. Der größte Teil des Kessels kann dann als Schmutzkammer genutzt werden. Die jeweilige Position der verschiebbaren Trennwand hängt von den Bedürfnissen des jeweiligen Einsatzes ab. Wenn beispielsweise aus dem Schmutzwasser ein verhältnismäßig großer Anteil an Festbestandteilen abgetrennt werden muß, wird man üblicherweise das maximale Volumen der Schmutzkammer wählen.

In einer bevorzugten Ausführungsform der vorliegenden Erfindung ist die erfindungsgemäße Entsorgungsvorrichtung auf einem Lastfahrzeug, insbesondere einem Lastkraftwagenchassis, montiert und dadurch zu den jeweiligen Einsatzorten verfahrbar.

Gegenstand der vorliegenden Erfindung ist auch ein Verfahren zum Abscheiden von Öl aus Schmutzwasser, bei dem die erfindungsgemäße Entsorgungsvorrichtung Verwendung findet, das folgendermaßen abläuft:
- verschmutztes Wasser wird über eine Förderpumpe in einen Zwischenfilter geleitet, wobei eine Abtrennung von festen Schmutzpartikeln erfolgt und die abgeschiedenen Schmutzpartikel in dem Auffangbehälter gesammelt werden,
- das aus dem Zwischenfilter abgezogene Wasser wird in einen Ölabscheider geleitet, von dem das abgeschiedene Öl in den Ölsammelbehälter
geleitet wird und das aus dem Ölabscheider abgeleitete Wasser wird durch einen Monitor geleitet, der eine Bestimmung des Kohlenwasserstoffgehaltes ermöglicht, wobei der Monitor ein Zweiwege-Ventil derart steuert, daß das Wasser nur dann in die Umgebung über den Ausgang entlassen wird, wenn ein bestimmter vorgegebener Grenzwert unterschritten wird und daß dann, wenn der Kohlenwasserstoffgehalt über dem vorgewählten Grenzwert liegt, das Wasser rückgeführt entweder in die Wassersammelkammer oder die Schmutzkammer wird.

Besonders vorteilhaft bei der erfindungsgemäßen Entsorgungsvorrichtung ist, daß gegenüber dem Stand der Technik eine weitere Verringerung des Kohlenwasserstoff-(Öl)-Gehaltes des Schmutzwassers erreicht werden kann. Bei der aus dem Stand der Technik bekannten Entsorgungsvorrichtung mußte, insbesondere wenn das ölhaltige Schmutzwasser als Detergens wirkende Chemikalien aufweist, für eine weitergehende Reduzierung des Kohlenwasserstoffgehaltes ein erneuter Durchgang durch die Entsorgungsvorrichtung bewerkstelligt werden. Der erfindungsgemäße Zwischenfilter in der Entsorgungsvorrichtung ermöglicht demgegenüber eine verbesserte Abtrennung des Öles aus dem Schmutzwasser im Rahmen eines jeden Durchganges.

Darüber hinaus können in dem Zwischenfilter gleichzeitig teilchenförmige Schmutzbestandteile (z.B. Sand etc.) abgetrennt werden, die in den Auffangbehälter gelangen und dann zu dem abgetrennten, teilchenförmigen Schmutz verbracht werden können. Dadurch wird eine Reinigung des Ölseparators von teilchenförmigen Verunreinigungen vermieden, die umständlich, arbeitsintensiv und somit teuer ist.

Besonders vorteilhafte Ausgestaltungen der vorliegenden Erfindung werden anhand der Zeichnungen beispielhaft erläutert.

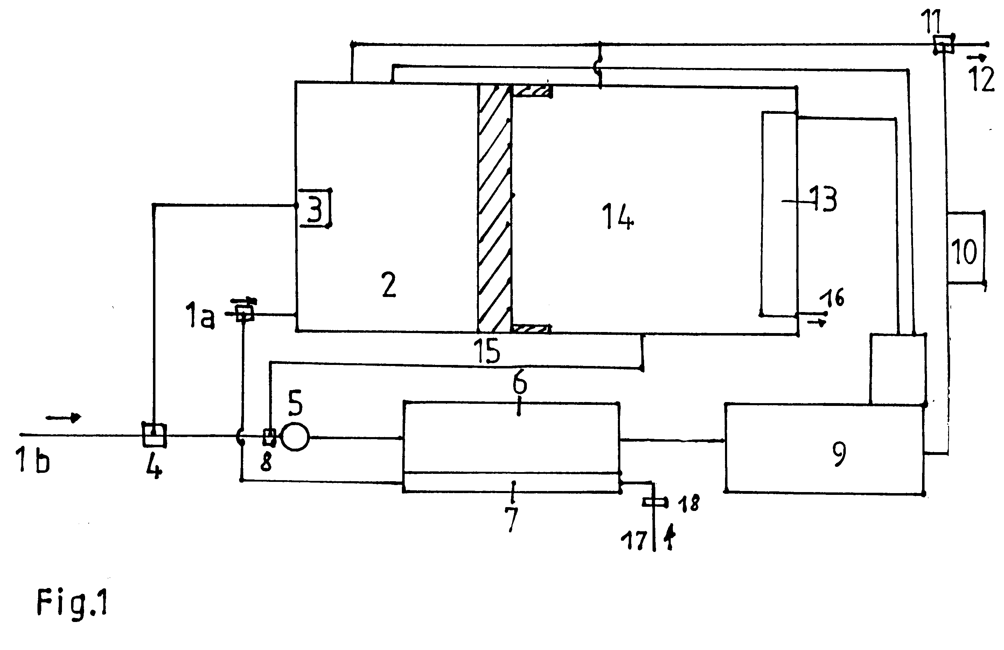

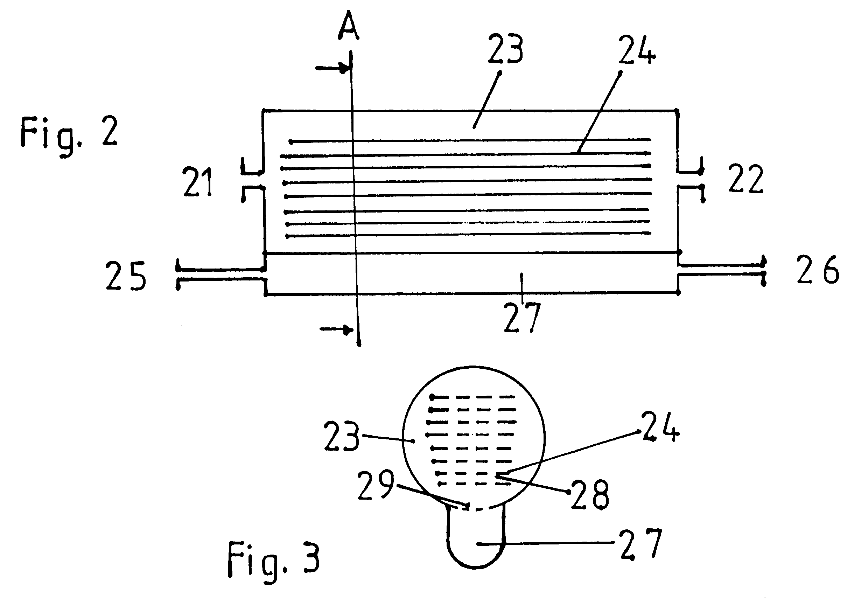

Figur 1 stellt schematisch die Anordnung der wesentlichen Teile der erfindungsgemäßen Entsorgungsvorrichtung dar. Stark mit Schmutz beladenes Abwasser wird über die Eingangsleitung 1a in die Schlammkammer 2 geführt, wo sich Schlamm absetzen kann. Das Wasser wird über den Vorfilter 3 abgezogen. Hierbei handelt es sich bei einer bevorzugten Ausführungsform um eine Lochtrommel, wobei die Durchmesser der Löcher bevorzugterweise im Bereich von etwa 5 mm liegen. Über eine Leitung und ein Zweiwege-Ventil 4 wird das Zu reinigende Wasser dann zu der Pumpe 5 geführt. Über das Zweiwege-Ventil 4 kann auch mit Öl verschmutztes Wasser über den Eingang 1b eingeleitet werden. Dies ist vor allem dann der Fall, wenn das Wasser nur mit Öl, aber kaum mit Schlamm verunreinigt ist. Durch die Förderpumpe 5 , die in bevorzugter Weise eine Schneckenpumpe ist, wird das Abwasser in den Zwischenfilter 6 geführt. Der genauere Aufbau eines bevorzugt verwendeten erfindungsgemäßen Zwischenfilters wird in den Figuren 2 und 3 näher dargestellt. An dem Zwischenfilter 6 ist ein Auffangbehälter 7 befestigt. Die dem Zwischenfilter 6 und dem Auffangbehälter 7 gemeinsame Wand weist Durchgangsöffnungen auf. In dem Zwischenfilter erfolgt eine Trennung in zweierlei Hinsicht. Einerseits wird eine Vorseparierung von Öl und Wasser erreicht und andererseits werden teilchenförmige Verunreinigungen wie Sand etc. abgeschieden. Die festen teilchenförmigen Verunreinigungen gelangen an den Boden des Zwischenfilters und von dort durch die Durchgangsöffnungen in den Auffangbehälter. Von Zeit zu Zeit kann der Schmutz aus dem Auffangbehälter 7 entfernt werden, indem Spülwasser bei dem Einlaß 17 eingeleitet und das Ventil 18 geöffnet wird. Das Ventil am Ausgang des Auffangbehälters ist ncht in Fig. 1 dargestellt. Der Spülausgang kann entweder ins Freie abgelassen werden oder in bevorzugter Form in den Schlammbehälter zurückgeleitet werden. Angesaugt wird das Spülwasser aus dem Auffangbehälter 7 , wenn die Schlammkammer 2 evakuiert ist.

Von dem Zwischenfilter wird das Wasser zu dem Ölseparator 9 über eine Leitung verbracht. Der Ölseparator ist an sich bekannt und im Handel erhältlich. In dem Ölseparator erfolgt eine Trennung von kohlenwasserstoffhaltigen Bestandteilen (Öl), die über eine Leitung in den Ölbehälter 13 geleitet werden können. Wenn der Ölbehälter gefüllt ist, kann das abgeschiedene Öl an einer geeigneten Sammelstelle über den Auslaß 16 abgelassen werden.

Das Abwasser wird von dem Ölseparator durch den Ölmonitor 10 geleitet. Bei diesem Monitor handelt es sich um eine Meßeinrichtung, die mit Hilfe der Streulichtmeßmethode die Konzentration an organischen Frachten bestimmen kann. Vorzugsweise wird hierzu Licht des Infrarotbereiches mit einer Wellenlänge von 950 bis 980 µm eingesetzt. Derartige Ölkonzentrationsmonitoren sind an sich bekannt. Durch geeignete Messungen wird der Ölkonzentrationsmonitor geeicht auf den Gehalt an organischen Kohlenwasserstoffen. Es ist so möglich, direkt die Konzentration an organischen Bestandteilen in ppm anzugeben. Aufgrund der gesetzlichen Vorschriften dürfen Abwässer, die in das Abwassernetz eingeleitet werden, bestimmte Konzentrationen an Kohlenwasserstoffen nicht überschreiten. An dem Monitor kann also eine bestimmte Konzentration an organischen Bestandteilen vorgewählt werden und der Monitor mittels einer Schaltung mit dem Zweiwege-Ventil 11 verbunden werden. Die Schaltung kann dann das Zweiwege-Ventil 11 derart steuern, daß ein Auslaß des gereinigten Wassers über den Ausgang 12 nur dann möglich ist, wenn ein bestimmter Grenzwert an organischem Bestandteil nicht überschritten wird. Wenn nun das Wasser eine höhere Konzentration an Kohlenwasserstoffen aufweist als der vorgewählte Wert, dann wird das Wasser mit Hilfe des Zweiwege-Ventils 11 entweder in die Schmutzkammer 2 oder in die Wassersammelkammer 14 geleitet.

Üblicherweise erfolgt eine Rückleitung des Wassers in die Schmutz- oder Wassersammelkammer nur bei solchen Abwässern, die hinsichtlich der Ölverschmutzung besonders problematisch sind.

Das in die Schmutzkammer 2 rückgeleitete Wasser kann dann über den Vorfilter 3 und die Pumpe 5 nochmals durch den Zwischenfilter 6 und den Ölseparator 9 geleitet werden. Wenn nun die gewünschten Grenzwerte erhalten sind, kann das Wasser über den Ausgang 12 abgelassen werden, ansonsten kann ein abermaliger Durchlauf erfolgen. In bevorzugter Weise ist eine Verbindungsleitung zwischen der Wassersammelkammer 14 und der Pumpe 5 vorgesehen, die über ein Zweiwege-Ventil 8 geöffnet werden kann. Bei dieser Art der Rückführung des Wassers wird die Schlammkammer und der Vorfilter umgangen.

Eine besonders bevorzugte Ausführungsform des erfindungsgemäßen Zwischenfilters wird in den Figuren 2 und 3 dargestellt.

Figur 2 zeigt einen Längsschnitt durch einen Zwischenfilter. Der Filterinnenraum 23 wird von dem Filtergehäuse umschlossen, das den Eingangsflansch 21 und Ausgangsflansch 22 aufweist. Eingeleitet wird das Wasser über den Eingangsflansch 21 , wonach das Wasser die Koaleszierplatten 24 in horizontaler Richtung durchströmt. Bei den Koaleszierplatten handelt es sich um Bleche, die im Querschnitt eine wellenartige Struktur aufweisen. Aufgrund der übereinander geschichteten, wellenartigen Koaleszierplatten 24 wird die Strömungsgeschwindigkeit vermindert und es tritt eine Anreicherungsbewegung der Kohlenwasserstoffteilchen nach oben ein. Dies ermöglicht eine bessere Abtrennung der Kohlenwasserstoffbestandteile.

Die Koaleszierplatten weisen an den Scheitelpunkten der Wellen Durchtrittsöffnungen auf, die einerseits eine Bewegung der Kohlenwasserstoffbestandteile nach oben und andererseits eine Absetzbewegung der teilchenförmigen Schmutzbestandteile nach unten ermöglichen. Teilchenförmiger Schmutz setzt sich daher an der dem Zwischenfilter und dem Auffangbehälter 27 gemeinsamen Wand ab. Die teilchenförmigen Schmutzpartikel gelangen durch die Durchtrittsöffnungen 29 in den Auffangbehälter 27 . Bei den Durchtrittsöffnungen handelt es sich in bevorzugter Weise um kreisförmige oder ovale Bohrungen.

Der Auffangbehälter 27 weist einen Einleitstutzen 26 und einen Ausleitstutzen 25 auf. Von Zeit zu Zeit kann der Auffangbehälter 27 durchspült werden, indem über den Anschluß 26 Wasser eingeleitet und über den Auslaß 25 abgeleitet wird. Diese Bauweise ermöglicht es, den Zwischenfilter von Verunreinigungen zu befreien, ohne daß eine zeitaufwendige Zerlegung des Filters zu Reinigungszwecken erforderlich ist.

Figur 3 zeigt den Zwischenfilter im Querschnitt gemäß der in Figur 2 dargestellten Linie A. Auch hier sind schematisch die Koaleszierplatten 24 dargestellt, die Durchtrittsöffnungen 28 aufweisen. Diese Koaleszierplatten 24 sind im Filterinnenraum angeordnet. In der Verbindungswand zwischen Zwischenfilter und Auffangbehälter 27 sind Durchtrittsöffnungen 29 vorgesehen, die ein Absetzen von Schmutzteilen ermöglichen.

## Patentansprüche

1. Entsorgungsvorrichtung zur Abscheidung von Öl aus Schmutzwasser, die folgende Komponenten umfaßt:
- einen Kessel, in dem sich ein Ölsammelbehälter (13) befindet, und eine Schlammkammer (2), die von einer Wassersammelkammer (14) durch eine verschiebbare Trennwand (15) getrennt wird, sowie einen Vorfilter (3),
- eine Förderpumpe (5) und einen Ölabscheider (9) sowie eine Rückführung des im Ölabscheider (9) vom Öl getrennten Brauchwassers in den Kessel, dadurch gekennzeichnet, daß die Entsorgungsvorrichtung weiterhin einen Zwischenfilter (6) aufweist, der zwischen der Förderpumpe (5) und dem Ölabscheider (9) angeordnet ist, wobei der Zwischenfilter (6) im Innenraum (23) des Filters Koaleszierplatten (24) aufweist und mit dem Boden des Filtergehäuses ein Auffangbehälter (27) verbunden ist, der mittels Durchgangsöffnungen (29) mit dem Filterinnenraum (23) in Verbindung steht.

2. Entsorgungsvorrichtung nach Anspruch 1, dadurch gekennzeichnet, daß sie einen Monitor zur Bestimmung des Kohlenwasserstoffgehaltes aufweist, der in der Wasserausgangsleitung des Ölseparators angeordnet ist und eine kontinuierliche Bestimmung des Kohlenwasserstoffgehaltes in dem aus dem Ölseparator austretenden Wasser ermöglicht.

3. Entsorgungsvorrichtung nach Anspruch 2, dadurch gekennzeichnet, daß der Kohlenwasserstoffmonitor nach der Methode der Streulichtmessung arbeitet und Licht des Infrarotbereiches, insbesondere einer Wellenlänge von 950 - 980 µm verwendet.

4. Entsorgungsvorrichtung nach einem der Ansprüche 2 oder 3, dadurch gekennzeichnet, daß der Monitor mit einem Linienschreiber verbunden ist.

5. Entsorgungsvorrichtung nach einem der vorhergehenden Ansprüche, dadurch gekennzeichnet, daß sie ein Zweiwege-Schaltventil (11) aufweist, das entweder eine Rückführung des aus dem Ölseparator (9) austretenden Wassers in den Wasserbehälter (14) oder die Schmutzkammer (2) oder andererseits den Auslaß des Wassers über den Ausgang (12) ermöglicht, wobei das Zweiwege-Schaltventil (11) über den Monitor (10) derart gesteuert wird, daß ein Ausleiten des gereinigten Wassers über den Ausgang (12) nur dann möglich ist, wenn der vom Monitor (10) gemessene Kohlenwasserstoffgehalt unter einem bestimmten, vorgewählten Wert liegt.

6. Entsorgungsvorrichtung nach einem der vorhergehenden Ansprüche, dadurch gekennzeichnet, daß die verschiebbare Trennwand (15) an der der Wassersammelkammer (14) zugewandten Seite so ausgestaltet ist, daß sie mit den der Wassersammelkammer (14) zugewandten Wänden des Ölbehälters (13) zusammenpaßt, wodurch ein nahezu vollständiges Zurückfahren der Trennwand (15) ermöglicht wird, so daß die Wassersammelkammer (14) nahezu kein Volumen mehr aufweist.

7. Entsorgungsvorrichtung nach einem der vorhergehenden Ansprüche, dadurch gekennzeichnet, daß sie fahrbar ist und auf einem Lastfahrzeug montiert ist.

8. Verfahren zum Abscheiden von Öl aus Schmutzwasser mittels einer Vorrichtung nach einem oder mehreren der Ansprüche 1 bis 7, dadurch gekennzeichnet, daß
- verschmutztes Wasser über eine Förderpumpe (5) in einen Zwischenfilter (6) geleitet wird, wobei eine Abtrennung von festen Schmutzpartikeln erfolgt und die abgeschiedenen Schmutzpartikel in dem Auffangbehälter (7) gesammelt werden,
- das aus dem Zwischenfilter (6) abgezogene Wasser in einen Ölabscheider (9) geleitet wird, von dem das abgeschiedene Öl in den Ölsammelbehälter (13) geleitet wird und das aus dem Ölabscheider abgeleitete Wasser durch einen Monitor (10) geleitet wird, der eine Bestimmung des Kohlenwasserstoffgehaltes ermöglicht, wobei der Monitor (10) ein Zweiwege-Ventil (11) derart steuert, daß das Wasser nur dann in die Umgebung über den Ausgang (12) entlassen wird, wenn ein bestimmter vorgegebener Grenzwert unterschritten wird und, daß wenn der Kohlenwasserstoffgehalt über dem vorgewählten Grenzwert liegt, das Wasser rückgeführt wird entweder in die Wassersammelkammer (14) oder die Schmutzkammer (2).

9. Verfahren nach Anspruch 8, dadurch gekennzeichnet, daß der vorgewählte, durch den Monitor bestimmte Grenzwert 5 ppm Kohlenwasserstoff beträgt.

## Claims

1. Waste disposal apparatus for the separation of oil from waste water, comprising the following components:
- a tank containing an oil reservoir (13), and a sludge chamber (2) separated from a water reservoir (14) by a sliding partition (15), as well as a preparatory filter (3),
- a delivery pump (5) and an oil separator (9), as well as a system for returning the operating water separated from the oil in the oil separator (9) to the tank, characterized in that the waste disposal apparatus also has an intermediate filter (6) disposed between the delivery pump (5) and the oil separator (9), the intermediate filter (6) having coalescing plates (24) in the interior (23) of the filter, and a reservoir (27) being connected to the bottom of the filter housing and, by means of transit ports (29), to the interior (23) of the filter.

2. Waste disposal apparatus according to Claim 1, characterized in that it has a monitor for determining the hydrocarbon content disposed in the water discharge passage of the oil separator, which enables a continuous assessment of the hydrocarbon content in the water leaving the oil separator to be made.

3. Waste disposal apparatus according to Claim 2, characterized in that the hydrocarbon monitor operates in accordance with the scattered light measurement method, and uses light in the infrared band, especially that having a wavelength of 950-980 µm.

4. Waste disposal apparatus according to one of Claims 2 or 3, characterized in that the monitor is connected to a graphic recording instrument.

5. Waste disposal apparatus according to one of the preceding claims, characterized in that it has a two-way switching valve (11), which either enables the water emitted from the oil separator (9) to be returned to the water reservoir (14) or the sludge chamber (2), or on the other hand enables the water to be discharged through the outlet (12), the two-way switching valve (11) being controlled in such a maker by the monitor (10) that it is only possible for the decontaminated water to be discharged through the outlet (12) when the hydrocarbon content measured by the monitor (10) is below a certain predetermined value.

6. Waste disposal apparatus according to one of the preceding claims, characterized in that the sliding partition (15) is so formed on the side facing the water reservoir (14) that it fits with the walls of the oil reservoir (13) facing the water reservoir (14), whereby an almost complete withdrawal of the partition (15) becomes possible, so that the water reservoir (14) has virtually nil volume.

7. Waste disposal apparatus according to one of the preceding claims, characterized in that it is mobile and is mounted on a goods vehicle.

8. Process for the separation of oil from waste water by means of an apparatus according to one or more of Claims 1 to 7, characterized in that
- contaminated water is conveyed by a delivery pump (5) to an intermediate filter (6), solid dirt particles being separated and the separated dirt particles being collected in a reservoir (7),
- the water drawn through the intermediate filter (6) is conveyed to an oil separator (9), from which the separated oil is conveyed to the oil reservoir (13), and the water discharged from the oil separator is passed through a monitor (10) which enables the hydrocarbon content to be determined, the monitor (10) controlling a two-way valve (11) in such a manner that the water is only discharged through the outlet (12) into the outside atmosphere when a certain predetermined critical value is reached, and that as long as the hydrocarbon content remains above the predetermined critical value the water is returned either to the water reservoir (14) or the sludge chamber (2).

9. Process according to Claim 8, characterized in that the predetermined critical value as assessed by the monitor is 5 ppm of hydrocarbon.

## Revendications

1. Dispositif d'élimination pour séparer de l'huile à partir d'une eau sale, qui comprend les composants suivants :
- une chaudière, dans laquelle est situé un récipient (13) de collecte de l'huile, et une chambre à boue (2), qui est séparée de la chambre (14) de collecte de l'eau, par une paroi de séparation mobile (15), ainsi qu'un préfiltre (3),
- une pompe de refoulement (5) et un séparateur d'huile (9) ainsi qu'un système de renvoi de l'eau industrielle, dont l'huile a été retirée dans le séparateur d'huile (9), dans la chaudière,
caractérisé en ce que le dispositif d'élimination comporte en outre un filtre intermédiaire (6), qui est disposé entre la pompe de refoulement (5) et le séparateur d'huile (9), le filtre intermédiaire (6) possédant, dans son espace intérieur (23), des plaques de coalescence (24), tandis qu'au fond du boîtier du filtre est raccordé un récipient de collecte (27), qui est relié à l'espace intérieur (23) du filtre au moyen d'ouvertures de passage (29).

2. Dispositif d'élimination selon la revendication 1, caractérisé en ce qu'il comporte un dispositif de contrôle pour déterminer la teneur en hydrocarbures, qui est disposé dans la canalisation de sortie de l'eau du séparateur d'huile et permet une détermination continue de la teneur en hydrocarbures dans l'eau qui sort du séparateur d'huile.

3. Dispositif d'élimination selon la revendication 2, caractérisé en ce que le dispositif de contrôle d'hydrocarbures travaille selon le procédé de la mesure en lumière diffuse et utilise une lumière dans la gamme infrarouge, notamment possédant une longueur d'onde de 950-980 µm.

4. Dispositif d'élimination selon l'une des revendications 2 ou 3, caractérisé en ce que le dispositif de contrôle est relié à un enregistreur de courbes.

5. Dispositif d'élimination selon l'une des revendications précédentes, caractérisé en ce qu'il comporte une soupape de commutation à deux voies (11), qui permet soit un renvoi de l'eau, qui sort du séparateur d'huile (9), dans le réservoir d'eau (14) ou dans la chambre à saletés (2) ou permet, sinon, l'évacuation de l'eau par la sortie (12), la soupape de commutation à deux voies (11) étant commandée par l'intermédiaire du dispositif de contrôle (10) de telle sorte qu'une évacuation de l'eau purifiée par l'intermédiaire de la sortie (12) n'est possible que lorsque la teneur en hydrocarbures, mesurée par le dispositif de contrôle (10), est inférieure à une valeur déterminée présélectionnée.

6. Dispositif d'élimination selon la revendication l'une des revendications précédentes, caractérisé en ce que la paroi de séparation mobile (15) située sur le côté tourné vers la chambre (14) de collecte de l'eau, est agencée de telle sorte qu'elle coopère avec les parois du réservoir d'huile (13), qui sont tournées vers la chambre (14) de collecte de l'eau, ce qui permet un retrait presque complet de la paroi de séparation (15) de sorte que le volume de la chambre (14) de collecte de l'eau devient presque nul.

7. Dispositif d'élimination selon l'une des revendications précédentes, caractérisé en ce qu'elle est déplaçable et est montée sur un camion.

8. Procédé pour séparer l'huile d'une eau sale au moyen d'un dispositif selon une ou plusieurs des revendications 1 à 7, caractérisé en ce que
- l'eau sale est envoyée par l'intermédiaire d'une pompe de refoulement (5) dans un filtre intermédiaire (6), auquel cas il se produit une séparation de particules solides de saletés, et les particules de saletés séparées sont collectées dans le récipient de collecte (7),
- l'eau, qui est prélevée du filtre intermédiaire (6), est envoyée à un séparateur d'huile (9), d'où l'huile séparée est envoyée dans le récipient de collecte d'huile (13) et l'eau évacuée du séparateur d'huile est envoyée dans un dispositif de contrôle (10), qui permet une détermination de la teneur en hydrocarbures, le dispositif de contrôle (10) commandant une soupape à deux voies (11) de telle sorte que l'eau est évacuée dans l'environnement par l'intermédiaire de la sortie (12) uniquement lorsque la teneur tombe au-dessous d'une valeur limite déterminée fixée par avance, et que, lorsque la teneur en hydrocarbures est supérieure à la valeur limite présélectionnée, l'eau est renvoyée soit dans la chambre (14) de collecte de l'eau, soit dans la chambre à saletés (12).

9. Procédé selon la revendication 8, caractérisé en ce que la valeur limite présélectionnée, déterminée par le dispositif de contrôle est égale à 5 ppm d'hydrocarbures.
